# EUROPEAN PATENT APPLICATION

(11) **EP 2 067 563 A1**
(43) Date of publication of application: **10.06.2009**
(21) Application number: 08019782.5
(22) Date of filing: 12.11.2008
(51) Int. Cl.: B23K 20/12

(54) **Friction-stir weldments and systems and methods for producing the same**

(30) Priority: 07.12.2007 US 952631
(71) Applicant: Alcoa Inc., Pittsburgh, PA 15212-5858 (US)
(72) Inventor: Bergstrom, Daniel B., Sarver, PA 16055 (US); Shoup, Jeffrey M., Delmont, PA 15626 (US); Peer, Gregory L., Delmont, PA 15626 (US); Stol, Israel, Pittsburgh, PA 15228 (US); Williams, Kyle, Shelocta, PA 15774 (US)
(74) Representative: Barton, Matthew Thomas

(57) **Abstract**

Friction-stir weldments and systems and methods for producing the same are disclosed. In one embodiment, a metal product includes a first metal plate (114) having a first center-neutral axis (115), a second metal plate (124) comprising a second center-neutral axis (125), and a friction-stir corner weld (12) that connects the first metal plate (114) to the second metal plate (124), where the first center-neutral axis (115) of the first metal plate (114) is transverse to the second center-neutral axis (125) of the second metal plate (115). In another embodiment, a system (150) for producing friction-stir weldments includes a backup anvil (160) having a first supporting face (162) and a second supporting face (164), where the first supporting face (164) is adapted to receive and support the first metal plate (114), and where the second supporting face (162) is adapted to receive and support a second metal plate (124), wherein the center-neutral axis (115) of the first metal plate (114) is transverse to the center-neutral axis (125) of the second metal plate (124).

## Description

### BACKGROUND

Friction-stir welding is a welding method that joins two or more metal pieces, generally without melting, and is primarily applicable to welding jobs where the metals' characteristics must see minimal change due to welding heat. The process may involve a rotating tool being pressed into the two or more metal pieces at the location of a desired weld. Heat from friction and deformation may plasticize the metal near the rotating tool. The plasticized regions coalesce into sound metallurgical bonds.

### SUMMARY OF THE DISCLOSURE

Broadly, the instant application relates to friction-stir weldments having friction-stir corner welds that are non-linear and non-perpendicular, and systems and methods for producing the same. The friction-stir weldment may find application in a variety of industrial applications due to the presence of the non-linear and non-perpendicular friction-stir corner weld.

In one aspect, metal products comprising friction-stir weldments are provided. In one approach, the products include a first metal plate having a first center-neutral axis, a second metal plate having a second center-neutral axis and a friction-stir corner weld that connects the first metal plate to the second metal plate, where the first center-neutral axis of the first metal plate is transverse to the second center-neutral axis of the second metal plate. Thus, the metal products may be considered corner welded. In one embodiment, the intersection between the first center-neutral axis and the second center-neutral axis defines an angle of from about 5° to about 85° or from about 95° to about 175°. In one embodiment, the corner weld comprises a top-face side and a bottom-root side, and where an angle of the corner weld proximal the bottom-root side is from about 5° to about 85° or from about 95° to about 175°.

The metal plates may be any suitable material capable of being welded via a friction-stir welding tool. In one embodiment, a first metal plate comprises a first aluminum alloy and a second metal plate comprises a second aluminum alloy. In one embodiment, the first aluminum alloy is different than the second aluminum alloy (e.g., a different composition or temper, to name two). In one embodiment, the first aluminum alloy is the same as the second aluminum alloy.

In another aspect, systems for producing friction-stir weldments are provided. In one approach, the system includes a backup anvil having a first supporting face and a second supporting face, a first set of restraining members capable of restrictively restraining the first metal plate on the first supporting face of the backup anvil, a second set of restraining members capable of restrictively restraining the second metal plate on the second supporting face of the backup anvil, and a friction-stir welding tool capable of welding the first metal plate to the second metal plate to produce a friction-stir weldment having a corner weld. In this approach, the second supporting face is generally opposite of the first supporting face. The first supporting face is generally adapted to receive and support a first metal plate, and the second supporting face is generally adapted to receive and support a second metal plate. The faces are generally oriented such that, after welding, the center-neutral axis of the first metal plate will be transverse to the center-neutral axis of the second metal plate.

The restraining members may be configured in any suitable orientation to restrict movement of the metal plates during welding. In one embodiment, either the first or second set of restraining members is capable of restrictively restraining a side portion of a metal plate. In a related embodiment, the other of the first and second set of restraining members is capable of restraining a top portion of the metal plate.

The backup anvil is generally configured to support the metal plates during welding such that, after welding, the center-neutral axis of a first metal plate is transverse to a center neutral axis of a second metal plate. In one embodiment, the backup anvil includes a pointed tip. In one embodiment, the backup anvil includes a flat top portion.

In one embodiment, the system includes an open space between the first supporting face and the second supporting face. In one embodiment, the friction-stir welding tool is a bobbin-style tool, and the open space is adapted to allow passage of a portion of the bobbin-style tool therethrough during friction-stir welding.

In yet another aspect, methods for producing friction-stir weldments are provided. In one embodiment, a method includes the steps of first restraining a first metal plate to a backup anvil in a first orientation, where the first metal plate comprises a first complementary end and a center-neutral axis, second restraining a second metal plate to the backup anvil in a second orientation, where the second metal plate comprises a second complementary end and a center-neutral axis, where, after the second restraining step, the first complementary end of the first metal plate abuts the second complementary end of the second metal plate and the center-neutral axis of the first metal plate is transverse to the center-neutral axis of the second metal plate, and welding the first metal plate to the second metal plate at the first and second complementary ends via a friction-stir welding tool, thereby producing a friction-stir weldment where the center-neutral axis of the first metal plate is transverse to the second center-neutral axis of the metal plate.

The plates may be prepared prior to restraining and/or welding. In one embodiment, a method includes, prior to a restraining step, preparing the metal plate. The preparing step may include machining an end of the metal plate to produce a complementary end. After the machining step, the complementary end may be capable of abutting another complementary end such that the center-neutral axis of the plates comprising the complementary ends are transverse to one another. In one embodiment, a method includes machining an end of another metal plate to produce the other complementary end. In one embodiment, the machining of the metal plate step includes machining a top portion of the metal plate to produce a mating surface, where the mating surface is adapted for engagement with a friction-stir welding tool. In one embodiment, a mating surface is a first mating surface, and a method further includes machining a top portion of another metal plate to produce a another mating surface, where this other mating surface is adapted for engagement with a friction-stir welding tool. In one embodiment, after metal plates are restrained, these mating surfaces of the define a substantially planar surface, and the substantially planar surface is adapted for engagement with a friction-stir welding tool.
According to the present invention, there is provided a metal product comprising a first metal plate comprising a first center-neutral axis; a second metal plate comprising a second center-neutral axis; and a friction-stir corner weld that connects the first metal plate to the second metal plate, wherein the first center-neutral axis of the first metal plate is transverse to the second center-neutral axis of the second metal plate.
Preferably, the intersection between the first center-neutral axis and the second center-neutral axis defines an angle of from about 5° to about 85° or from about 95° to about 175°.
Advantageously, the corner weld comprises a top-face side and a bottom-root side, and wherein an angle of the corner weld proximal the bottom-root side is from about 5° to about 85° or from about 95° to about 175°.
Conveniently, the first metal plate comprises a first aluminum alloy and the second metal plate comprises a second aluminum alloy.
Preferably, the first aluminum alloy is different than the second aluminum alloy.
The present invention also provides a system comprising a backup anvil having a first supporting face and a second supporting face, wherein the second supporting face is opposite of the first supporting face, wherein the first supporting face is adapted to receive and support a first metal plate, and wherein the second supporting face is adapted to receive and support a second metal plate, wherein the center-neutral axis of the first metal plate is transverse to the center-neutral axis of the second metal plate; a first set of restraining members capable of restrictively restraining the first metal plate on the first supporting face of the backup anvil; a second set of restraining members capable of restrictively restraining the second metal plate on the second supporting face of the backup anvil; and a friction-stir welding tool capable of welding the first metal plate to the second metal plate to produce a friction-stir weldment having a friction-stir corner weld, wherein, as welded, the center-neutral axis of the first metal plate is transverse to the center-neutral axis of the second metal plate.
Preferably, the system further comprises open space the first supporting face and the second supporting face.
Conveniently, the friction-stir welding tool is a bobbin-style tool, and wherein the open space is adapted to allow passage of a portion of the bobbin-style tool therethrough during friction-stir welding.
Advantageously, one of the first set of restraining members is capable of restrictively restraining an side portion of the first metal plate.
Conveniently, one of the first set of restraining members is capable of restraining a top portion of the first metal plate.
Preferably, the backup anvil includes a pointed tip.
Advantageously, the backup anvil includes a flat top portion.
The invention also provides a method comprising first restraining a first metal plate to a backup anvil in a first orientation, wherein the first metal plate comprises a first complementary end and a center-neutral axis; second restraining a second metal plate to the backup anvil in a second orientation, wherein the second metal plate comprises a second complementary end and a center-neutral axis, wherein after the second restraining step the first complementary end of the first metal plate abuts the second complementary end of the second metal plate, and wherein the center-neutral axis of the first metal plate is transverse to the center-neutral axis of the second metal plate; and welding the first metal plate to the second metal plate at the first and second complementary ends via a friction-stir welding tool, thereby producing a friction-stir weldment having the center-neutral axis of the first metal plate transverse to the second center-neutral axis of the metal plate.
Preferably, the method further comprises, prior to the first restraining step, preparing the first metal plate, wherein the preparing comprises: machining an end of the first metal plate to produce the first complementary end, wherein after the machining step, the first complementary end is capable of abutting the second complementary end such that the center-neutral axis of the first metal plate is transverse to the center-neutral axis of the second metal plate.
Advantageously, the machining of the first metal plate step comprises machining a top portion of the first metal plate to produce a mating surface, wherein the mating surface is adapted for engagement with a friction-stir welding tool.
Advantageously, the method further comprises machining an end of the second metal plate to produce the second complementary end.
Preferably, the mating surface is a first mating surface, and wherein the method further comprises: machining a top portion of the second metal plate to produce a second mating surface, wherein the second mating surface is adapted for engagement with a friction-stir welding tool.
Advantageously, after the first restraining and second restraining steps, the first and second mating surfaces of the first and second metal plates define a substantially planar surface, wherein the substantially planar surface is adapted for engagement with a friction-stir welding tool.

As may be appreciated, various ones of the inventive aspects noted hereinabove may be combined to yield various friction-stir weldments. These and other aspects, advantages, and novel features of the invention are set forth in part in the description that follows and will become apparent to those skilled in the art upon examination of the following description and figures, or may be learned by practicing the invention.

### BRIEF DESCRIPTION OF THE DRAWINGS

FIG. 1a is a perspective view illustrating one embodiment of a friction-stir weldment having a friction-stir corner weld.

FIG. 1b is a close-up view of the friction-stir corner weld of FIG. 1a.

FIG. 2 is a schematic, perspective view of one embodiment of a system for producing friction-stir weldments.

FIG. 3 is a schematic, cross-sectional view of another embodiment of a system for producing friction-stir weldments.

FIG. 4 is a schematic, cross-sectional view of another embodiment of a system for producing friction-stir weldments.

FIG. 5 is a schematic, cross-sectional view of another embodiment of a system for producing friction-stir weldments.

FIG. 6 is a schematic, perspective view of another embodiment of a system for producing friction-stir weldments.

FIG. 7 is a schematic, cross-sectional view of another embodiment of a system for producing friction-stir weldments.

FIG. 8 is a flow chart illustrating embodiments of methods for producing friction-stir weldments.

FIG. 9 is a flow chart illustrating an embodiment of a method for preparing metal plates.

FIG. 10 is a schematic view illustrating various prepared metal plates.

FIG. 11a is a photograph illustrating a top-face side of a friction-stir weldment.

FIG. 11b is a photograph illustrating a bottom-root side of a friction-stir weldment.

### DETAILED DESCRIPTION

The following non-limiting definitions are used herein to assist in describing various aspects, approaches and embodiments of the instant invention.

"Friction-stir welding" means a solid-state joining process for joining two or more metal products to one another. The joining is effected by forcing a rotating friction-stir welding tool into the joining area to plasticize the metal proximal the tool. The plasticized regions coalesce into sound metallurgical bonds.

"Plasticize" means to soften metal without substantially liquefying and/or melting the metal.

"Friction-stir welding tool" means any apparatus capable of friction-stir welding, such as conventional single-probe tools, or bobbin-style tools.

"Friction-stir corner weld" means a friction-stir weld that joins a first metal product to a second metal product via a friction stir welding tool, wherein, after welding, a center-neutral axis of the first metal product is transverse to a center-neutral axis of the second metal product. The friction-stir corner weld may include a top-face side. For full penetration welds, the friction-stir corner weld may include a bottom-root side. In one embodiment, the friction-stir corner weld has an angle of from about 5° to about 85° or from about 95° to about 175°, as determined via the intersection of the center-neutral axis of the first and second metal products.

"Transverse" means non-perpendicular with respect to an angle formed by the intersection of two planes, and includes all angles from about 5° to about 85° and from about 95° to about 175°.

"Center-neutral axis" means an axis that extends through a center portion of a material (e.g., a plate).

A "metal plate" means a metal product having a thickness of at least about 0.5 inch.

"FSW" means friction-stir welding.

"Friction stir weldment" or "FSWeldment" means a product produced from friction-stir welding. The FSWeldment may include a first metal plate joined to a second metal plate via a friction-stir corner weld.

"Aluminum alloy" means an aluminum metal including at least one other metal alloyed therewith. Aluminum alloys include, but are not limited to, the 1XXX - 8XXX series aluminum alloys as defined by the Aluminum Association, Inc.

"Backup anvil" means a block that at least partially counteracts the forging force (Fz) imparted by the FSW tool, and which has surfaces adapted to produce friction-stir corner welds.

"Restraining member" means any various types of apparatus or systems (e.g., clamps) available to restrain pieces (e.g., metal plates) during friction stir welding. The restraining members should locate and firmly hold the pieces being friction-stir welded so that the pieces do not move and/or separate at the abutment of the pieces being friction-stir welded.

"Abutment" means the point of contact between two objects.

"Z-force" or "plunging force" or "Fz" means the force applied by a friction-stir welding tool to the pieces being friction stir welded and the plasticized material in the welding area about the FSW tool, in the generally vertical direction.

"Speed of travel" means a speed of advancement of the friction-stir welding tool during friction-stir welding.

"X-force" or "advancing force" or "Fx" means the force necessary to move the friction stir welding tool through the pieces during friction stir welding at a speed of travel.

"Joint efficiency" means the ratio of the ultimate tensile strength of a welded joint relative to the ultimate tensile strength of the original piece.

"Ultimate tensile strength" means the maximum stress that a material can withstand, and may be measured, for example, via ASTM E8M-04, April 2004.

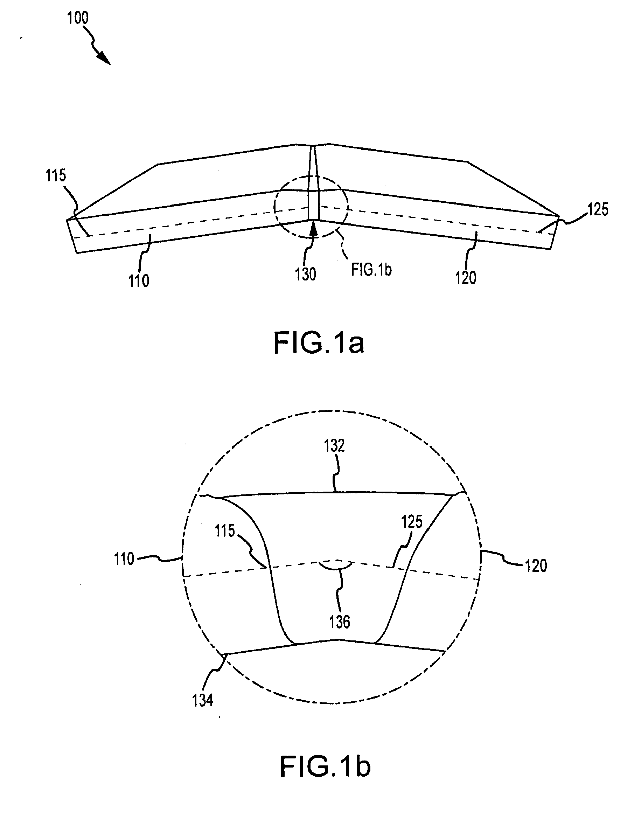

Reference will now be made in detail to the accompanying drawings, which at least assist in illustrating various pertinent embodiments of the present invention. One embodiment of FSWeldment produced via a friction-stir welding tool is illustrated in FIGS. 1a - 1b. In the illustrated embodiment, the FSWeldment 100 includes a first metal plate 110 and a second metal plate 120. A friction-stir corner weld 130 connects the first metal plate 110 to the second metal plate 120. The friction-stir corner weld 130 is produced via a friction-stir welding tool. In the illustrated embodiment, a center-neutral axis 115 of the first metal plate 110 is transverse to a center-neutral axis 125 of the second metal plate 120. Thus, the FSWeldment has a friction-stir corner weld that is non-linear and non-perpendicular. To produce the FSWeldment, and as described in further detail below, a FSW tool and backup anvil are used to join abutting sides (sometimes referred to herein as complementary ends) of the first and second metal plates 110, 120.

The friction-stir corner weld 130 is produced via a friction-stir welding tool, as described in further detail below. In this regard, the friction-stir corner weld 130 generally includes a top-face side 132, and may include a bottom-root side 134, such as when full-penetration frictions-stir welds are completed. In the illustrated embodiment of FIG. 1b, the friction-stir corner weld 130 includes such a top-face side 132 and a bottom-root side 134. The first metal plate 110 and the second metal plate 120 are connected to one another in a non-perpendicular and non-linear fashion to form the friction-stir corner weld 130, as illustrated by angle 136. Angle 136 may be any angle between 1° and 89° or between 179° and 91°. In one embodiment, angle 136 is from about 95° to about 175°. In another embodiment, angle 136 is from about 5° to about 85°. In the illustrated embodiment, the angle 136 is approximately 166°.

The first metal plate 110 and the second metal plate 120 may be any metal plates adapted to be welded to one another via friction-stir welding. In one embodiment, the first metal plate 110 and the second metal plate 120 comprise the same metal. In another embodiment, the first metal plate 110 and the second metal plate 120 comprise differing metals. In one embodiment, at least one of the metal plates comprises an aluminum alloy (e.g., any of the 2XXX, 3XXX, 5XXX, 6XXX, or 7XXX series aluminum alloys defined by the Aluminum Association, Inc). In one embodiment, the first metal plate 110 comprises one of a series 5XXX and 6XXX aluminum alloy, and the second aluminum metal plate 120 comprises one of a 5XXX series and a 6XXX series aluminum alloy.

The FSWeldments 100 may be utilized in a variety of applications. For example, the FSWeldments 100 may be utilized in defense applications (e.g., armored vehicles), marine applications (e.g., hulls for ships), and energy applications (e.g., holding tanks), to name a few. The FS Weldments 100 generally have a joint efficiency of at least about 55%, which is dependent on the alloy combinations and their tempers before and after welding. In one embodiment, the FSWeldments 100 generally have a joint efficiency in the range of from about 55% to about 90%.

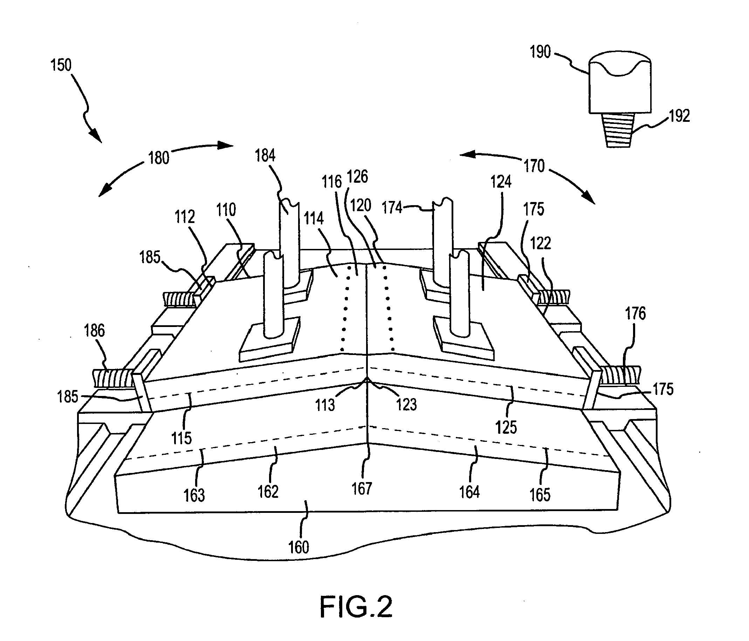

Systems for producing FSWeldments 100 are also provided, one embodiment of which is illustrated in FIG. 2. In the illustrated embodiment, the system 150 includes a backup anvil 160, a first set of restraining members 170, which includes two side restraining members 175 and two top restraining members 174, and a second set of restraining members 180, which includes two side restraining members 185 and two top restraining members 184. The system also includes a friction-stir welding tool 190 (not to scale).

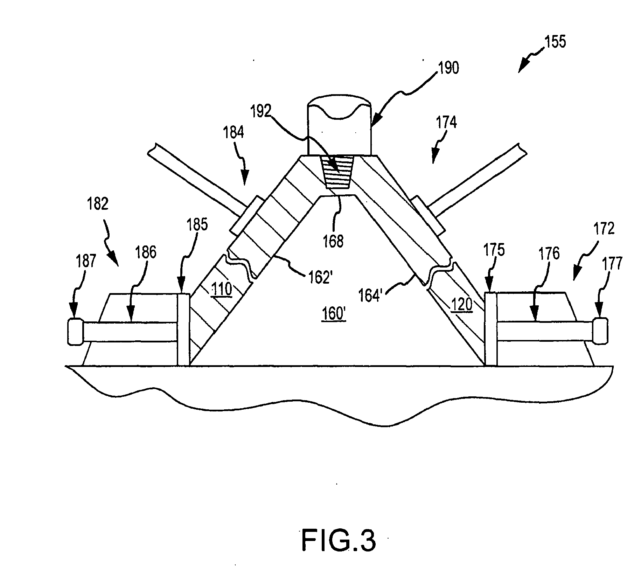

The side restraining members 175, 185 are adapted to restrain at least a portion of the distal sides 112, 122, of the first metal plate 110 and the second metal plate 120, respectively. The top restraining members 174, 184 are adapted to restrain top portions 114, 124 of the first and second metal plates 110, 120, respectively. The side restraining members 175, 185 and top restraining members 174, 184 should be designed to locate and firmly hold the metal plates 110, 120 from separating at the abutment of the proximal sides 113, 123 of the first and second metal plates 110, 120, and from uncontrollably shifting in any direction during friction-stir welding. The side restraining members 175, 185 each may be interconnected to a selectively positionable member 176, 186 (e.g., a screw) so that it is capable of selectively positioning the side restraining members 175, 185 relative to the distal sides 112, 122. The selectively positionable members 176, 186 may thus be selectively advanced and retracted to facilitate engagement with the metal plates 110, 120, such as via movement (e.g., rotation) of heads 177, 187 (illustrated in FIG. 3).

As illustrated, four restraining members per metal plate are used. In practice, at least one, but preferably a plurality of restraining members per metal plate may be used. The type and number of restraining members is a function of, for instance, the geometry and dimensions (e.g., the length, width and/or thickness) of the metal plates being friction-stir welded. As illustrated, the first and second sets of restraining members 170, 180 include two top clamps 174, 184 and two side clamps 175, 185. However, other suitable restraining members may be utilized.

The backup anvil 160 includes a first face 162 and a second face 164. The first face 162 is opposite the second face 164 and has a top axis 163 that is transverse to a top axis 165 of the second face 164. The first face 162 is adapted to support the first metal plate 110 during friction-stir welding, and the second face 164 is adapted to support the second metal plate 120 during friction-stir welding. The backup anvil 160 may include a pointed tip 167 as defined by the intersection of the top axis 163, 165 of the first and second faces 162, 164. In other embodiments, and as described in further detail below, the backup anvil 160 may include a flat top portion. The backup anvil should comprise a material that is sufficiently sturdy to counteract the forging force (Fz) imparted by the FSW tool, such as a metal (e.g., steel, iron) a ceramic, or any other suitably sturdy material.

Prior to being welded, and as described in further detail below, the metal plates 110, 120 may be prepared so as to facilitate production of the friction-stir corner weld, such as by machining one or more surfaces of at least one of the metal plates 110, 120 (e.g. to produce machined surfaces 116, 126). After preparation (if necessary), the first and second metal plates may be placed on the backup anvil 160. In the illustrated embodiment, the first metal plate 110 is oriented such that its center-neutral axis 115 is coincidental to (e.g., parallel to or slightly offset from) the top axis 163 of the first side 162 of the anvil 160. The center-neutral axis 125 of the second metal plate 120 is coincidental to the top axis 165 of the second side 164 of the anvil 160. Thus, as positioned for friction-stir welding, the center-neutral axis 115 of the first metal plate 110 is transverse to the center-neutral axis 125 of the second metal plate 120. The proximal side portions 113, 123 of the first metal plate 110 and second metal plate 120, respectively, are proximal one another (e.g., abutting) so as to facilitate production of the friction-stir corner weld 130 (not indicated on FIG. 2) via friction-stir welding tool 190. Thus, FSWeldments having friction-stir corner welds may be produced.

In operation, the first set of restraining members 170 are positioned to restrain one plate 120, and the second set of restraining members 180 are positioned to restrain another metal plate 110. Next, a pin 192 of a friction-stir welding tool 190 is plunged between proximal sides 113, 123 of the first and second metal plates 110, 120, respectively, to produce the friction-stir corner weld 130 and thus to produce the FSWeldment. The friction-stir welding parameters may be varied based on application. In one embodiment, a conventional friction-stir welding process utilizes a Z-force of not greater than about 13,000 lbf and produces an X-force of not greater than about 2,000 lbf. In a related embodiment, the friction-stir welding tool may spin at an RPM of not greater than about 250 RPM and may have a travel speed of not greater than about 6 inches per minute.

With respect to bobbin-style friction-stir welding tools (described below), the process may utilize a Z-force, which is the force imparted to the parts and plasticized material in the FSW area, between the two shoulders of the FSW tool, of not greater than about 1,000 lbf and produce an X-force of not greater than about 1,300 lbf. In such embodiments, the spin may be not greater than about 225 RPM, and the travel speed may be not greater than about 4 inches per minute.

As noted above, the backup anvil 160 may include a pointed tip 167 to facilitate production of friction-stir corner welds 130 having a likewise pointed bottom welded surface (e.g., the top axis of the first and second metal faces 162, 164 intersect at the point near or at the interface of the proximal sides 113, 123). In other embodiments, the backup anvil may have a flat top portion, which may facilitate production of friction-stir corner welds having a planar bottom welded surface. For example, and with reference to FIG. 3, a system 155 may include a backup anvil 160' having first and second faces 162', 164', where the top axis (not illustrated) of the first and second faces 162', 164' do not intersect at the interface between the proximal sides 113, 123 of the first and second metal plates 110, 120. Thus, a flat top portion 168 may be included with the backup anvil 160'. The flat top portion 168 may be flush with bottom surfaces of at least one of the first and second metal plates 110, 120 so as to support such bottom surfaces during friction-stir welding. Thus, FSWeldments having a planar friction-stir corner welded surface (e.g., an interior or exterior surface) may be produced.

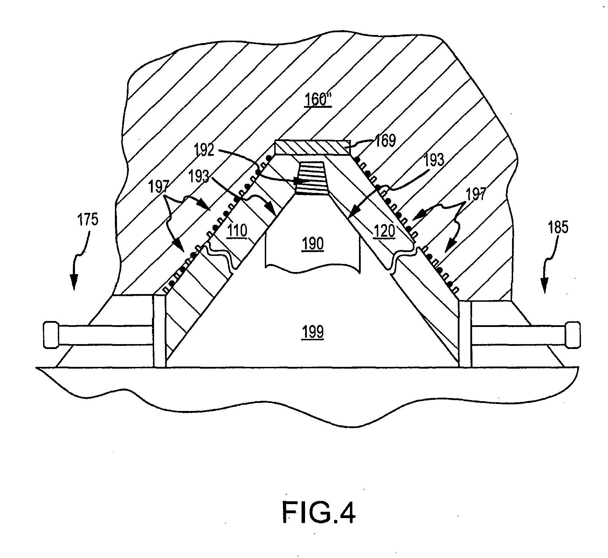

Other backup anvil configurations may also be utilized. For example, and with reference to FIG. 4, a backup anvil 160'' may be used to support top portions of the metal plates 110, 120 and empty space 199 may be included below the metal plates 110, 120 to facilitate movement of a friction-stir welding tool 190 therethrough. In the illustrated embodiment, the anvil is flush with the metal plates 110, 120 and stabilizes / restrains the plates 110, 120. A metal plate 169 may be used to facilitate engagement of the anvil and the metal plates 110, 120 proximal the weld zone. In this embodiment, top clamps may not be required. In the illustrated embodiment, a conventional restraining apparatus 197 (e.g., alternating vacuum channels and gaskets) are embedded in the anvil's 160 surface to facilitate restraining of the plates 110, 120. The friction-stir welding tool 190 may also include appropriate shoulders 193 to facilitate interface with the metal plates 110, 120 during the production of the friction-stir corner weld.

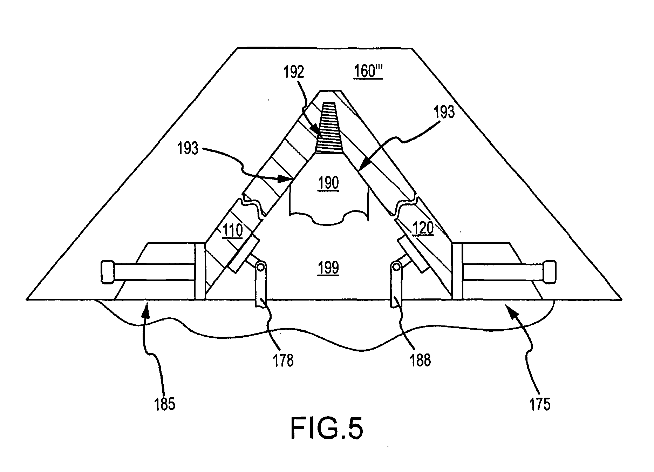

In another embodiment, and with reference to FIG. 5, a backup anvil 160''' may be arranged to support both the metal plates 110, 120, without the use of internal restraining features. In this embodiment, the anvil, itself, acts to support the plates by mirroring the shape of the weldment.[0001] First and second clamps 178, 188 may be utilized to restrain the first and second metal plates 110, 120, respectively, from a direction opposite to that provided by the anvil 160'''. As with FIG. 4, the friction-stir welding tool 190 may include appropriate shoulders 193 to facilitate interface with the metal plates 110, 120 and production of the friction-stir corner weld. In the illustrated embodiment, the pin 192 of the friction-stir welding tool 190 is more elongated than those illustrated in FIG. 2, 3, and 4. Such a pin 192 may be used, for example, when a deeper weld is required.

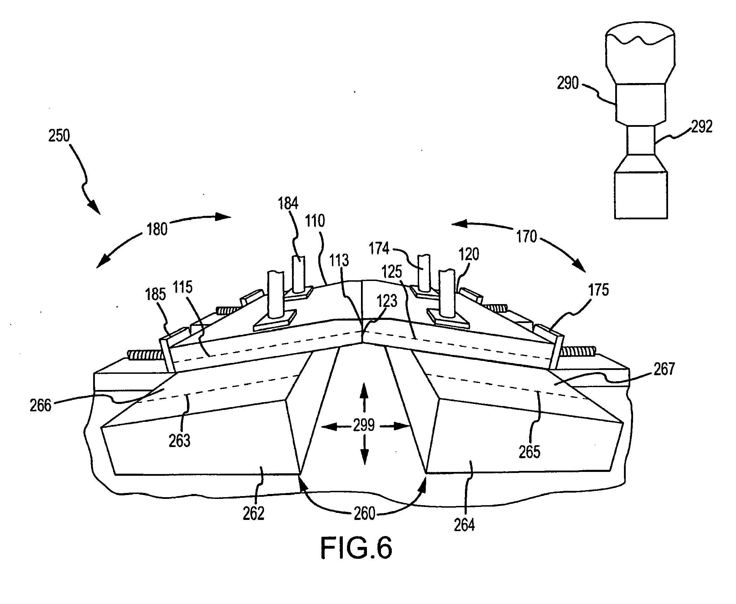

In the above embodiments, conventional friction-stir welding tools were utilized to illustrate production of friction-stir corner welds. In other embodiments, bobbin-style friction stir welding tools may be employed to produce friction-stir corner welds. For example, and with reference to FIG. 6, a system 250 may include a backup anvil 260 having a first portion 262 and a second portion 264. The first portion 262 includes a first face 266 for at least partially supporting a first metal plate 110 to be friction-stir welded via a bobbin-style friction-stir welding tool 290 (not to scale). The first portion 262 further includes a top axis 263. The second portion 264 includes a second face 267 for at least partially supporting the second metal plate 120. The second portion 264 further includes a top axis 265. The intersection of the top axis 263, 265 is non-linear and non-perpendicular, thus facilitating production of friction-stir corner welds. The first and second portions 262, 264 may be fixedly restrained such that they are unable to move during friction-stir welding. For instance, the first and second portions 262, 264 may be bolted to an underlying frame and/or restraints may exist in the space 299 such that the first and second portions 262, 264 are unable to move away from each other during welding. The backup anvil 260 further includes an open space 299 to accommodate movement of the bobbin tool 290 therethrough. First and second sets of restraining members 170, 180 may be utilized to restrain the metal plates 110, 120 during friction-stir welding.

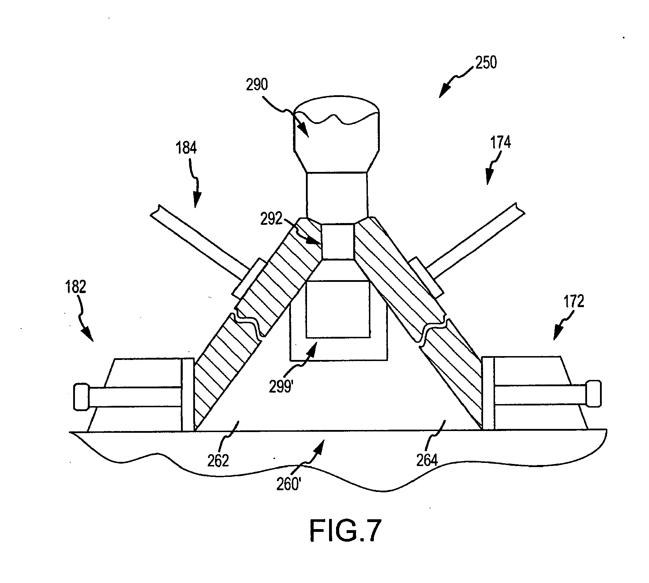

The system 250 operates similar to system 150, described above with reference to FIG. 2, except that, during operation, the bobbin-style friction-stir welding tool 290 will be moved into and translated through the joint formed by the abutting complementary ends 113, 123 of the first metal plate 110 and the second metal plate 120. With respect to the bobbin-style system 250, the center-plane of the friction-stir corner weld may be substantially parallel to a center line of the welding pin of the bobbin tool 290, but the center-neutral axis 115, 125 of the first and second metal plates 110, 120 will be transverse to one another due to the configuration of the backup anvil 260. Thus, FS Weldments having friction-stir corner welds may be produced via bobbin-style friction-stir welding tools. As illustrated in FIG. 6, the backup anvil may be split into two separate pieces. In other embodiments, the backup anvil 260' may be a unitary material and open space 299' may be included therein, as illustrated in FIG. 7.

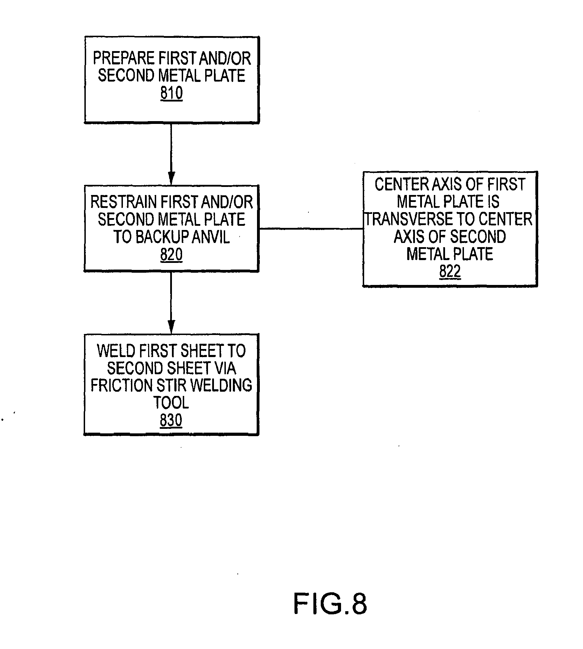

Methods of producing welded metal plates are also provided, one embodiment of which is illustrated in FIG. 8. In the illustrated embodiment, the method includes the steps of restraining first and/or second metal plates to a backup anvil (820) and welding the first metal plate to the second metal plate via a friction-stir welding apparatus (830). The method may also optionally include the step of preparing the first and/or second metal plates (810) for the restraining step (820) and/or the welding step (830).

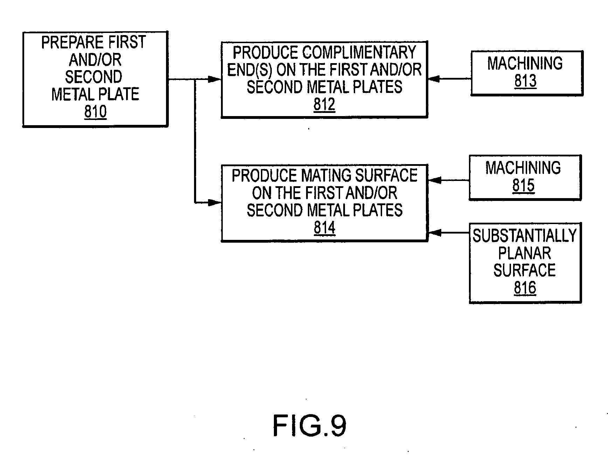

With respect to the preparing the first and/or second metal plates step (810), and with reference now to FIG. 9, the metal plates may be prepared by producing one or more complementary ends on the first and/or second metal plates (812). In one approach, the ends are machined (813) via conventional machining apparatus / processes. The first and/or second metal plates may also be prepared by producing one or more mating surfaces on the first and/or second metal plates (814). In one approach, the mating surfaces are produced via machining (813), such as via a conventional machining apparatus / processes. In one embodiment, the mating surface may be a substantially planar surface (816), which may facilitate engagement with a pin of a friction-stir welding tool. As illustrated, the complementary ends are produced before the mating surfaces are produced. However, the mating surfaces may be produced before the complementary ends are produced, or the complementary ends and the mating surfaces may be produced concomitantly.

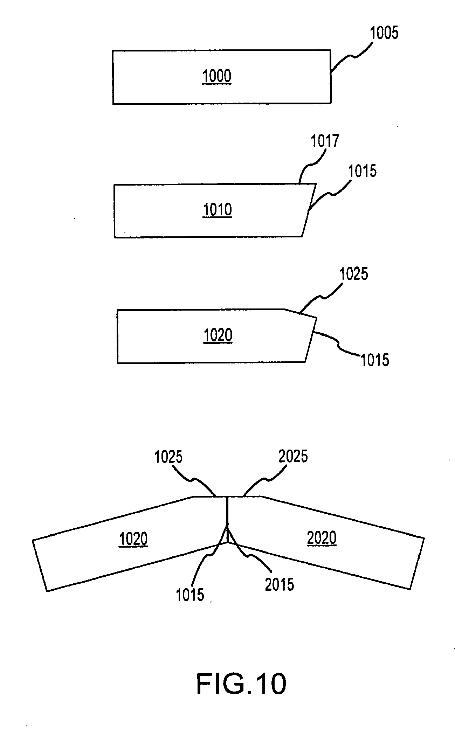

An example of a method for producing complementary ends and mating surfaces to facilitate production of FSWeldments is illustrated in FIG. 10. In the illustrated embodiment, a first end 1005 of a base metal plate 1000 may be machined to produce a complementary end 1015 of metal plate 1010. This complementary end 1015 may be machined to any suitable taper to facilitate production of the friction-stir weldment having the appropriate friction-stir corner weld angle. The mating surface may facilitate engagement between surfaces of the plates and the friction-stir welding tool. In one approach, a complementary end 1015 and/or top portion 1017 of tapered metal plate 1010 may be machined to produce a mating surface 1025 of metal plate 1020. Thus, when metal plate 1020, having a complementary end 1015 and a mating surface 1025, is abutted with another metal plate 2020, also having a complementary end 2015 and a mating surface 2025, the complementary ends 1015, 2015 may abut one another in a substantially planar fashion, and mating surfaces 1025, 2025 may form a substantially planar surface (e.g., a planar top and/or bottom surface). The substantially planar surface may facilitate engagement with a pin of a friction-stir welding tool. When bobbin-style tools are used, mating surfaces may be produced on both the top and bottom sides of the metal plates. Other surfaces of a plate or plates may also be machined to facilitate production of the FSWeldments. For example interfacing top, bottom, or side surfaces of a plate or plates may be machined to facilitate engagement with the backup anvil and/or restraining members. In one approach, a distal side of a plate is machined to facilitate engagement between an side restraining member and the distal side of the metal plate (e.g., as illustrated in FIG. 3).

Referring back to FIG. 8, with respect to the restraining the first and second metal plates to the anvil step (820), the first metal plate may be restrained to a first side of the anvil and the second metal plate may be restrained to a second side of the anvil in any suitable manner, such as those described above. In one embodiment, at least one restraining member is utilized to restrain the first and/or second metal plates to the anvil. The restraining step (820) generally results in the center axis of the first metal plate being transverse to the center axis of the second metal plate (822). Thus, when the welding step is completed (830), described below, the metal plates may be transverse to one another in the friction stir weldment.

The welding step (830) may be completed by any conventional friction-stir welding apparatus. In one embodiment, a conventional friction-stir welding apparatus may be plunged between abutting ends of the first metal plate and the second metal plate to plasticize such ends and produce a friction-stir corner weld.

### Examples

### Example 1 - Production of FSWeldments using aluminum alloy plates

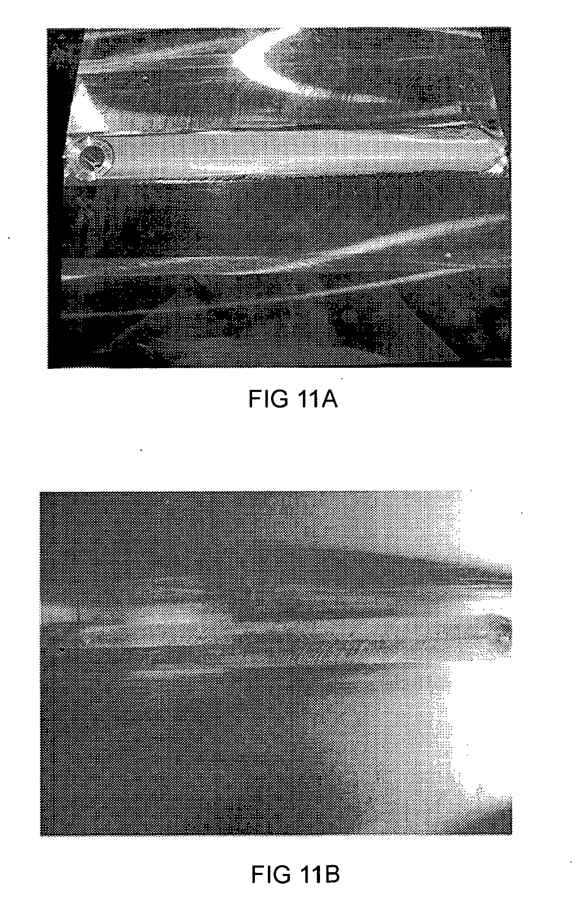

a) A system similar to FIG. 2 is provided. The first plate is a 0.84 inch thick 6013-T6 series aluminum alloy and the second plate is a 0.84 inch thick 6013-T6 series aluminum alloy. The abutting ends of the plates have a 0.75 inch thickness at the abutment. A friction-stir welding tool is used to weld the first plate to the second plate. The backup anvil has an included angle of 165° as measured at the abutment of the plates. Operating parameters include 5 inches per minute speed of travel, 224 RPM tool rotation rate, 2° forward FSW tool angle, and about 11,100 lbf forging force (Fz) with a resultant 2,100 lbf reaction force (Fx) on the advancing FSW tool, thereby producing a FSWeldment having a friction-stir corner weld. The friction-stir corner weld has a top-face side and a bottom-root side, as illustrated in FIGS 11a and 11b. The FSWeldment has an interior angle of about 166°.

(b) A system similar to FIG. 2 is provided. The first plate is a 0.84 inch thick 5083-O plate and the second plate is a 0.84 inch thick 5083-O plate. The abutting ends of the plates have a 0.75 inch thickness at the abutment. A friction-stir welding tool is used to weld the first plate to the second plate. The backup anvil has an included angle of 165° as measured at the abutment of the plates. Operating parameters include 3.5 inches per minute speed of travel, 140 rpm tool rotation rate, 2° forward FSW tool angle, and about 13,100 lbf forging force (Fz) with a resultant 2,200 lbf reaction force on the advancing FSW tool, thereby producing a FSWeldment having a friction-stir corner weld.

(c) A system similar to FIG. 2 is provided. The first plate is a 0.84 inch thick 5083-0 plate and the second plate is a 0.84 inch thick 6013-T6 plate. The abutting ends of the plates have a 0.75 inch thickness at the abutment. A friction-stir welding tool is used to weld the first plate to the second plate. The backup anvil has an include angle of 165° as measured at the abutment of the plates. Operating parameters include 3.5 inches per minute speed of travel, 140 rpm tool rotation rate, 2° forward FSW tool angle, and about 12,500 lbf forging force (Fz) between the shoulders of the FSW tool with a resultant 2,000 lbf reaction force (Fx) on the advancing FSW tool, thereby producing a FSWeldment having a friction-stir corner weld.

### Example 2 - Production of friction-stir corner welds using a bobbin-style friction-stir welding tool

(a) A system similar to FIG. 6 is provided. The first plate is a 0.84 inch thick 6013-T6 plate and the second plate is a 0.84 inch thick 6013-T6 plate. The abutting ends of the plates have a 0.75 inch thickness at the abutment. A bobbin-style friction-stir welding tool is used to weld the first plate to the second plate. The backup anvil has an include angle of 165° as measured at the abutment of the plates. Operating parameters include 3.5 inches per minute speed of travel, 224 rpm tool rotation rate, about 1,000 lbf forging force (Fz) with a resultant 1,300 lbf reaction force on the advancing FSW tool, thereby producing a FSWeldment having a friction-stir corner weld.

While various embodiments of the present invention have been described in detail, it is apparent that modifications and adaptations of those embodiments will occur to those skilled in the art. However, it is to be expressly understood that such modifications and adaptations are within the spirit and scope of the present invention.

In the present specification "comprises" means "includes or consists of' and "comprising" means "including or insisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilized for realizing the invention in diverse forms thereof.

## Claims

1. A metal product comprising:
a first metal plate comprising a first center-neutral axis;
a second metal plate comprising a second center-neutral axis; and
a friction-stir corner weld that connects the first metal plate to the second metal plate, wherein the first center-neutral axis of the first metal plate is transverse to the second center-neutral axis of the second metal plate.

2. The metal product of Claim 1, wherein the intersection between the first center-neutral axis and the second center-neutral axis defines an angle of from about 5° to about 85° or from about 95° to about 175°.

3. The metal product of Claim 1, wherein the corner weld comprises a top-face side and a bottom-root side, and wherein an angle of the corner weld proximal the bottom-root side is from about 5° to about 85° or from about 95° to about 175°.

4. The metal product of Claim 1, wherein the first metal plate comprises a first aluminum alloy and the second metal plate comprises a second aluminum alloy.

5. The metal product of Claim 4, wherein the first aluminum alloy is different than the second aluminum alloy.

6. A system comprising:
a backup anvil having a first supporting face and a second supporting face, wherein the second supporting face is opposite of the first supporting face, wherein the first supporting face is adapted to receive and support a first metal plate, and wherein the second supporting face is adapted to receive and support a second metal plate, wherein the center-neutral axis of the first metal plate is transverse to the center-neutral axis of the second metal plate;
a first set of restraining members capable of restrictively restraining the first metal plate on the first supporting face of the backup anvil;
a second set of restraining members capable of restrictively restraining the second metal plate on the second supporting face of the backup anvil; and
a friction-stir welding tool capable of welding the first metal plate to the second metal plate to produce a friction-stir weldment having a friction-stir corner weld, wherein, as welded, the center-neutral axis of the first metal plate is transverse to the center-neutral axis of the second metal plate.

7. The system of Claim 6, further comprising:
open space between the first supporting face and the second supporting face.

8. The system of Claim 7, wherein the friction-stir welding tool is a bobbin-style tool, and wherein the open space is adapted to allow passage of a portion of the bobbin-style tool therethrough during friction-stir welding.

9. The system of Claim 6, wherein one of the first set of restraining members is capable of restrictively restraining an side portion of the first metal plate.

10. The system of Claim 6, wherein one of the first set of restraining members is capable of restraining a top portion of the first metal plate.

11. The system of Claim 6, wherein the backup anvil includes a pointed tip.

12. The system of Claim 7, wherein the backup anvil includes a flat top portion.

13. A method comprising:
first restraining a first metal plate to a backup anvil in a first orientation, wherein the first metal plate comprises a first complementary end and a center-neutral axis;
second restraining a second metal plate to the backup anvil in a second orientation, wherein the second metal plate comprises a second complementary end and a center-neutral axis, wherein after the second restraining step the first complementary end of the first metal plate abuts the second complementary end of the second metal plate, and wherein the center-neutral axis of the first metal plate is transverse to the center-neutral axis of the second metal plate; and
welding the first metal plate to the second metal plate at the first and second complementary ends via a friction-stir welding tool, thereby producing a friction-stir weldment having the center-neutral axis of the first metal plate transverse to the second center-neutral axis of the metal plate.

14. The method of Claim 13, further comprising
prior to the first restraining step, preparing the first metal plate, wherein the preparing comprises:
machining an end of the first metal plate to produce the first complementary end, wherein after the machining step, the first complementary end is capable of abutting the second complementary end such that the center-neutral axis of the first metal plate is transverse to the center-neutral axis of the second metal plate.

15. The method of Claim 14, wherein the machining of the first metal plate step comprises:
machining a top portion of the first metal plate to produce a mating surface, wherein the mating surface is adapted for engagement with a friction-stir welding tool.

16. The method of Claim 14, further comprising:
machining an end of the second metal plate to produce the second complementary end.

17. The method of Claim 15, wherein the mating surface is a first mating surface, and wherein the method further comprises:
machining a top portion of the second metal plate to produce a second mating surface, wherein the second mating surface is adapted for engagement with a friction-stir welding tool.

18. The method of Claim 17, wherein after the first restraining and second restraining steps, the first and second mating surfaces of the first and second metal plates define a substantially planar surface, wherein the substantially planar surface is adapted for engagement with a friction-stir welding tool.
